# EUROPEAN PATENT SPECIFICATION

(11) **EP 3 208 106 B1**
(45) Date of publication and mention of the grant of the patent: **05.12.2018**
(21) Application number: 17153960.4
(22) Date of filing: 31.01.2017
(51) Int. Cl.: B60C 1/00, B60C 11/00, B60C 19/08, B29D 30/52

(54) **TIRE TREAD AND MANUFACTURING METHOD OF THE SAME**
LUFTREIFEN UND HERSTELLUNGSVERFAHREN DAFÜR
BANDE DE ROULEMENT DE PNEUMATIQUE ET SON PROCÉDÉ DE FABRICATION

(30) Priority: 22.02.2016 KR 20160020345
(43) Date of publication of application: 23.08.2017
(73) Proprietor: Hankook Tire Co., Ltd., Seoul 135-723 (KR)
(72) Inventor: Kim, Byung Lip, 34200 Daejeon (KR)
(74) Representative: Petraz, Gilberto Luigi

(56) References cited:
- WO-A1-03/059655
- KR-A- 20030 015 403
- US-A1- 2007 221 303

## Description

### [Technical Field]

The present invention relates to a tire tread with improved absorbency and permeability (drainage), as well as enhanced grip performance on wet roads.

### [Background Art]

When racing at a high speed, drivers suffer from problems such as deteriorated permeability (drainage) and grip performance of tires in rain. In this case, wet tires are used so as to reinforce grip performance. However, moisture remains on wet roads during rain as well as after rain, or there is no suitable alternative to damp roads on which moisture is not visible on the surface thereof.

In conventional methods, the content of silica was increased in order to improve permeability and grip performance on wet roads. When the silica content of the tread is increased (to 100 parts by weight or more, with respect to 100 parts by weight of a base rubber), mixing may be difficult due to poor dispersibility. When a water drainage line is formed on a tread by applying an excessive air pressure to tires so as to overcome this problem, tire inner heat may cause swelling during continuous driving and thus high load may be applied to the car body.

In addition, because driving on wet roads is vulnerable to heat, it is difficult to enhance racing performance only with improvement in permeability.

Although an intermediate tire between a dried tire and a wet tire is used, the road completely dried during driving may be rapidly abraded due to temperature elevation and it may be difficult to determine whether or not a tire is used, depending on the conditions of the road and air.

Document US-A-2007/221303 for example describes a known tire with rubber tread composed of a primary and at least one lateral tread portion containing a dispersion of short carbon fibers.

Accordingly, there is a need for development of tires that offer excellent grip performance even during high-speed driving on wet roads.

### [Disclosure]

### [Technical Problem]

Therefore, it is an object of the present invention to provide a tire tread with improved absorbency and permeability as well as enhanced grip performance on wet roads.

### [Technical Solution]

In accordance with one aspect of the present invention, the above and other objects can be accomplished by the provision of a tire tread including a silica bar extending in a tire circumferential direction, wherein an upper part of the silica bar is exposed to a tread so as to contact the road.

The silica bar includes silica having different particle sizes disposed in upper and lower parts in a tread thickness direction, wherein silica with a particle diameter of 1.5 to 3.0 µm is present in the upper part of the silica bar and silica with a particle diameter of 3.5 to 5.0 µm is present in the lower part of the silica bar.

The silica bar may have a width of 0.2 to 30 mm and a height of 0.2 to 30 mm.

An insertion angle of the silica bar may be 5 to 90°, based on the under tread.

The upper part of the silica bar may be disposed in a cap tread and the lower part of the silica bar may be disposed in an under tread.

The upper and lower parts of the silica bar may be disposed in the cap tread.

The silica bar may be produced using a master batch including 100 parts by weight of a base rubber, 30 to 180 parts by weight of silica and 5 to 50 parts by weight of ultrafine particle carbon black.

The tread including the silica bar may include a cap tread and an under tread, wherein the cap tread excluding the silica bar includes 100 parts by weight of a base rubber and 50 to 80 parts by weight of silica.

The tread including the silica bar may include a cap tread and an under tread, wherein the under tread excluding the silica bar includes 100 parts by weight of a base rubber and 10 to 20 parts by weight of silica.

The base rubber may include any one selected from the group consisting of polyisoprene rubber, polybutadiene rubber, a conjugated diene aromatic vinyl copolymer, a nitrile conjugated diene copolymer, hydrogenated nitrile butadiene rubber, olefin rubber, ethylene-propylene rubber modified with maleic acid, butyl rubber, a copolymer of isobutylene and aromatic vinyl, a copolymer of isobutylene and a diene monomer, acrylic rubber, halogenated rubber, chloroprene rubber and a mixture thereof.

The tire tread may further include 0.5 to 4.0 parts by weight of a vulcanizing agent, 0.5 to 2.0 parts by weight of a vulcanization accelerator, and 0.5 to 2.0 parts by weight of an antioxidant, with respect to 100 parts by weight of the base rubber.

The tire tread may be a slick tire tread.

In another aspect of the present invention, provided is a method of producing a tire tread including producing a silica bar, refining a tire tread composition in the form of a bar, alternately arranging the tire tread composition refined in the form of a bar and the silica bar in a molding frame and producing a tread by extrusion.

### [Effects of the Invention]

According to the present invention, absorbency and permeability of a tire tread can be improved.

The present invention provides a tire tread with improved grip performance on wet roads.

### [Description of Drawings]

The above and other objects, features and other advantages of the present invention will be more clearly understood from the following detailed description taken in conjunction with the accompanying drawings, in which:
FIG. 1 schematically shows a structure of a part of a tire tread according to an embodiment of the present invention;
FIG. 2 is a plan view illustrating a cross-section of a part of a tire tread according to an embodiment of the present invention; and
FIG. 3 is a plan view illustrating a cross-section of a part of a tire tread according to another embodiment of the present invention.

### [Best Mode]

Hereinafter, the present invention will be described in more detail.

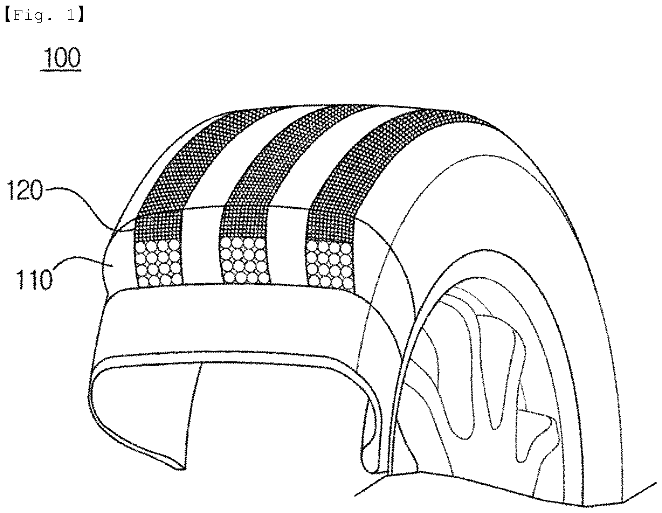

FIG. 1 schematically shows a structure of a part of a tire tread according to an embodiment of the present invention.

FIG. 1 is provided only as an example for illustration of the present invention and the present invention is not limited thereto.

The tire tread according to the present invention includes a silica bar 120 extending in a circumferential direction of a tire 100, wherein an upper part of the silica bar 120 is exposed to the outside of the tread 110 so as to contact the road.

The silica bar 120 is exposed and directly contacts the road to further improve absorbency and permeability of the tread 110.

The silica bar 120 may have a bar, strip or cord shape with a width of 0.2 to 30 mm and a height of 0.2 to 30 mm.

The silica bar 120 may be inserted at an angle of 5 to 90° based on an under tread, and is most preferably inserted vertically to the under tread. That is, the silica bar 120 may be inserted at an angle of 5 to 90° with respect to the interface between the under tread and the cap tread.

The silica bar 120 may include silica with particles having different sizes disposed in upper and lower parts in a tread 110 thickness direction and may include silica with a particle diameter of 1.5 to 3.0 µm in the upper part thereof and silica with a particle diameter of 3.5 to 5.0 µm in the lower part thereof.

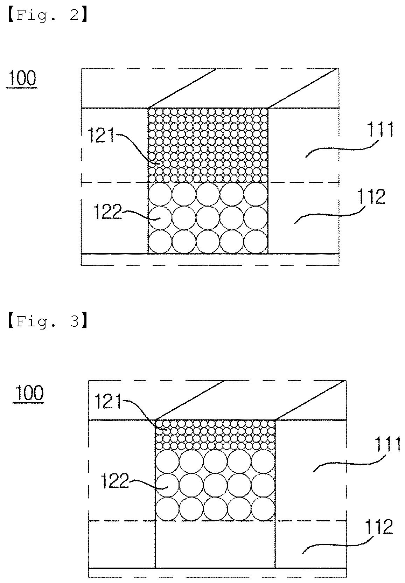

FIGS. 2 and 3 are plan views illustrating a cross-section of a part of the tire tread according to an embodiment of the present invention. The tread 110 may include a cap tread 111 which makes contact with the road and an under tread 112 disposed under the cap tread 111. Similarly, the silica bar 120 may include an upper silica bar 121 and a lower silica bar 122.

In this case, in the silica bar 120, the upper silica bar 121 directly contacting the road includes smaller silica than the lower silica bar 122. The upper silica bar 121 includes smaller silica, thereby increasing the content of silica. For this reason, grip performance can be improved and mixing problems can be solved.

When the silica particle diameter of the upper silica bar 121 is less than 1.5 µm, grip performance is not improved and, when the silica particle diameter of the upper silica bar 121 exceeds 3.0 µm, mixing problems may occur due to deteriorated dispersibility.

The lower silica bar 122 includes larger silica particles than the upper silica bar 121, thereby absorbing water on the road more rapidly, and discharging water rapidly by pressure generated by friction between particles on the lower silica bar 122.

In addition, repeated friction between silica particles with different sizes improves insufficient grip performance on wet roads, thereby enhancing performance of the tire 100.

In this case, the upper silica bar 121 may be disposed at the cap tread 111 and the lower silica bar 122 may be disposed at the under tread 112 (FIG. 2), or both the upper silica bar 121 and the lower silica bar 122 may be disposed at the cap tread 111 (FIG. 3).

The silica bar 120 may include 100 parts by weight of a base rubber, 30 to 180 parts by weight of silica and 5 to 50 parts by weight of ultrafine particle carbon black. The silica bar 120 may be produced using a master batch including 100 parts by weight of a base rubber, 30 to 180 parts by weight of silica, and 5 to 50 parts by weight of ultrafine particle carbon black.

The tread 110, excluding the silica bar, may be formed using an ordinary composition for tire treads, the cap tread 111 and the under tread 112 may have identical or different composition. Specifically, the cap tread 111 excluding the silica bar 120 may include 100 parts by weight of a base rubber and 50 to 80 parts by weight of silica. In addition, the under tread 112 excluding the silica bar 120 may include 100 parts by weight of a base rubber and 10 to 20 parts by weight of silica.

Hereinafter, a rubber composition for producing the tread will be described in detail.

### (1) Base rubber

The base rubber may be any one selected from the group consisting of polyisoprene rubber, polybutadiene rubber, a conjugated diene aromatic vinyl copolymer, a nitrile conjugated diene copolymer, hydrogenated nitrile butadiene rubber, olefin rubber, ethylene-propylene rubber modified with maleic acid, butyl rubber, a copolymer of isobutylene and aromatic vinyl, a copolymer of isobutylene and a diene monomer, acrylic rubber, halogenated rubber, chloroprene rubber and a mixture thereof.

### (2) Silica

The silica may have a nitrogen surface area per gram (N₂SA) of 210 to 680 m²/g, which is 3.5 or more times the surface area of conventionally used silica particles. By using silica having a large surface area, hydroplaning can be prevented owing to improved water absorbance.

The silica may be produced by a wet method or dry method and commercially available silica products include Ultrasil VN2 (Degussa Ag, Ltd.), Ultrasil VN3 (Degussa Ag, Ltd.), Z1165MP (Rhodia Corp.), Z165GR (Rhodia Corp.) and the like.

The silica may be present in an amount of 30 to 180 parts by weight, preferably 30 to 100 parts by weight, more preferably, 60 to 100 parts by weight, with respect to 100 parts by weight of the base rubber. When the content of the silica is less than 30 parts by weight, the strength of the rubber cannot be sufficiently improved and braking performance of the tire may be deteriorated, and when the content of silica exceeds 180 parts by weight, abrasion resistance may be deteriorated.

In order to improve dispersibility of the silica, a coupling agent may be further included.

The coupling agent may include any one selected from the group consisting of sulfide silane compounds, mercaptosilane compounds, vinyl silane compounds, amino silane compounds, glycidoxy silane compounds, nitrosilane compounds, chlorosilane compounds, methacrylic silane compounds and combinations thereof, and is preferably a sulfide silane compound.

The sulfide silane compound may include any one selected from the group consisting of bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoltetrasulfide, 3-trimethoxysilylpropylmethacrylatemonosulfide, 3-trimethoxysilylpropylmethacrylatemonosulfide and combinations thereof.

The mercaptosilane compound may include any one selected from the group consisting of 3-mercaptopropyltrimethoxysilane, 3-mercaptopropyltriethoxysilane, 2-mercaptoethyltrimethoxysilane, 2-mercaptoethyltriethoxysilane and combinations thereof. The vinyl silane compound may include any one selected from the group consisting of ethoxysilane, vinyltrimethoxysilane and a combination thereof. The amino silane compound may include any one selected from the group consisting of 3-aminopropyltriethoxysilane, 3-aminopropyltrimethoxysilane, 3-(2-aminoethyl)aminopropyltriethoxysilane, 3-(2-aminoethyl)aminopropyltrimethoxysilane and combinations thereof.

The glycidoxy silane compound may include any one selected from the group consisting of γ-glycidoxypropyltriethoxysilane, γ-glycidoxypropyltrimethoxysilane, γ-glycidoxypropylmethyldiethoxysilane, γ-glycidoxypropylmethyldimethoxysilane and combinations thereof. The nitro silane compound may include any one selected from the group consisting of 3-nitropropyltrimethoxysilane, 3-nitropropyltriethoxysilane and combinations thereof. The chlorosilane compound may include any one selected from the group consisting of 3-chloropropyltrimethoxysilane, 3-chloropropyltriethoxysilane, 2-chloroethyltrimethoxysilane, 2-chloroethyltriethoxysilane and a combination thereof.

The methacrylic silane compound may include any one selected from the group consisting of γ-methacryloxypropyltrimethoxysilane, γ-methacryloxypropylmethyldimethoxysilane, γ-methacryloxypropyldimethylmethoxysilane and combinations thereof.

The coupling agent may be present in an amount of 1 to 20 parts by weight, with respect to 100 parts by weight of the base rubber. When the content of the coupling agent is less than 1 part by weight, dispersibility of silica cannot be sufficiently improved and processability of the rubber or fuel efficiency may be deteriorated, and when the content of the coupling agent exceeds 20 parts by weight, fuel efficiency is excellent, but braking performance may be significantly deteriorated due to excessively strong interaction between silica and the rubber.

### (3) Ultrafine particle carbon black

According to the present invention, to solve the problems of deteriorated processability and dispersibility occurring when mixing is conducted using silica in order to improve grip performance, ultrafine particle carbon black with excellent complementarity may be used in combination with a powder-type vegetable resin with excellent dispersibility.

By using in combination with ultrafine particle carbon black, mixing of the rubber composition can be facilitated while maintaining benefits of silica.

The ultrafine particle carbon black may have an iodine adsorption value of 200 to 1000 mg/g and a DBP oil absorption of 150 to 800 ml/100g.

### (4) Other additive

Optionally, the tire rubber composition may further include a variety of additives such as a vulcanizing agent, a vulcanization accelerator, an antioxidant, an activator and a softener. The variety of additives may be any one selected from additives commonly used in the field to which the present invention pertains. The content of the additives depends on the mix ratio used for ordinary rubber compositions for tires and is not particularly limited.

Examples of the vulcanizing agent that can be used in the present invention include sulfur vulcanizing agents, organic peroxide, resin vulcanizing agents and metal oxides such as magnesium oxide.

Examples of the sulfur vulcanizing agent that can be used in the present invention include: inorganic vulcanizing agents such as powdered sulfur (S), insoluble sulfur (S), precipitated sulfur (S) and colloidal sulfur (S); and organic vulcanizing agents such as tetramethylthiuram disulfide (TMTD), tetraethylthiuram disulfide (TETD) and dithiodimorpholine. Specifically, examples of the sulfur vulcanizing agent that can be used in the present invention include elemental sulfur, a vulcanizing agent producing sulfur, for example amine disulfide, polymer sulfur or the like.

The organic peroxide may include any one selected from the group consisting of benzoylperoxide, dicumyl peroxide, di-t-butylperoxide, t-butylcumylperoxide, methylethylketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexane, 1,3-bis(t-butylperoxypropyl)benzene, di-t-butylperoxy-diisopropylbenzene, t-butylperoxybenzene, 2,4-dichlorobenzoylperoxide, 1,1-dibutylperoxy-3,3,5-trimethylsiloxane, n-butyl-4,4-di-t-butylperoxyvalerate and combinations thereof.

It is preferable that the vulcanizing agent is present in an amount of 0.5 to 4.0 parts by weight, with respect to 100 parts by weight of the base rubber in consideration of suitable vulcanizing effects that the base rubber is less sensitive to heat and is chemically stable.

The vulcanization accelerator refers to an accelerator which facilitates a vulcanization speed or facilitates a delay during initial vulcanization.

The vulcanization accelerator may include any one selected from the group consisting of sulfenamide, thiazol, thiuram, thiourea, guanidine, dithiocarbamate, aldehyde-amine, aldehyde-ammonia, imidazoline, xanthate and combinations thereof.

For example, the sulfenamide vulcanization accelerator may include any one sulfenamide compound selected from the group consisting of N-cyclohexyl-2-benzothiazolesulfonamide (CBS), N-tert-butyl-2-benzothiazolesulfonamide (TBBS), N,N-dicyclohexyl-2-benzothiazolesulfenamide, N-oxydiethylene-2-benzothiazolesulfenamide, N,N-diisopropyl-2-benzothiazolsulfenamide and combinations thereof.

For example, the thiazole vulcanization accelerator may include any one thiazole compound selected from the group consisting of sodium salts of 2-mercaptobenzothiazole (MBT), dibenzothiazoledisulfide (MBTS) and 2-mercaptobenzothiazole, zinc salts of 2-mercaptobenzothiazole, copper salts of 2-mercaptobenzothiazole, cyclohexylamine salts of 2-mercaptobenzothiazole, 2-(2,4-dinitrophenyl)mercaptobenzothiazole, 2-(2,6-diethyl4-morpholinothio)benzothiazole and a combination thereof.

For example, the thiuram vulcanization accelerator may include any one thiuram compound selected from the group consisting of tetramethyl thiuram disulfide (TMTD), tetraethyl thiuram disulfide, tetramethyl thiuram monosulfide, dipentamethylene thiuram disulfide, dipentamethylene thiuram monosulfide, dipentamethylene thiuram tetrasulfide, dipentamethylene thiuram hexasulfide, tetrabutyl thiuram disulfide, pentamethylene thiuram tetrasulfide and a combination thereof.

For example, the thiourea vulcanization accelerator may include any thiourea compound selected from the group consisting of thiocarbamide, diethylthiourea, dibutylthiourea, trimethylthiourea, diorthotollylthiourea and combinations thereof.

For example, the guanidine vulcanization accelerator may include any one guanidine compound selected from the group consisting of diphenylguanidine, diorthotollylguanidine, triphenylguanidine, orthotollylbiguanide, diphenylguanidine phthalate and combinations thereof.

For example, the dithiocarbamate vulcanization accelerator may include any one dithiocarbamate compound selected from the group consisting of zinc ethylphenyl dithiocarbamate, zinc butylphenyl dithiocarbamate, sodium dimethyl dithiocarbamate, zinc dimethyl dithiocarbamate, zinc diethyl dithiocarbamate, zinc dibutyl dithiocarbamate, zinc diamyl dithiocarbamate, zinc dipropyl dithiocarbamate, complex salts of zinc pentamethylene dithiocarbamate and piperidine, zinc hexadecylisopropyl dithiocarbamate, zinc octadecyl isopropyl dithiocarbamate, zinc dibenzyl dithiocarbamate, sodium diethyl dithiocarbamate, pentamethylene dithiocarbamate piperidine, selenium dimethyl dithiocarbamate, tellurium diethyl dithiocarbamate, cadmium diamyl dithiocarbamate and combinations thereof.

For example, the aldehyde-amine or aldehyde-ammonia vulcanization accelerator may include any one aldehyde-amine or aldehyde-ammonia compound selected from the group consisting of acetaldehyde-aniline reaction products, butyraldehyde-aniline condensation products, hexamethylenetetramine, acetaldehyde-ammonia reaction products and combinations thereof.

For example, the imidazoline vulcanization accelerator may include an imidazoline compound such as 2-mercaptoimidazoline, and for example, the xanthate vulcanization accelerator may be a xanthate compound such as zinc dibutyl xanthate.

The vulcanization accelerator may be present in an amount of 0.5 to 2.0 parts by weight, with respect to 100 parts by weight of the base rubber, to maximize improvement in production efficiency and improvement in physical properties of the rubber based on improved vulcanization speed.

The vulcanization accelerator activator is an additive used in combination with the vulcanization accelerator to complete an acceleration effect thereof and includes any one selected from the group consisting of inorganic vulcanization accelerator activators, organic vulcanization accelerator activators and combinations thereof.

The inorganic vulcanization accelerator activator may include any one selected from the group consisting of zinc oxide (ZnO), zinc carbonate, magnesium oxide (MgO), lead oxide, potassium hydroxide and combinations thereof. The organic vulcanization accelerator activator may include any one selected from the group consisting of stearic acid, zinc stearate, palmitic acid, linoleic acid, oleic acid, lauric acid, dibutyl ammonium oleate, derivatives thereof and combinations thereof.

In particular, a combination of zinc oxide and stearic acid may be used as the vulcanization accelerator activator. In this case, zinc oxide is dissolved in stearic acid to form an effective complex with the vulcanization accelerator which produces advantageous sulfur during vulcanization and to facilitate crosslinkage of the rubber.

When zinc oxide and stearic acid are used in combination, they may be used in amounts of 1 to 5 parts by weight and 0.5 to 3 parts by weight, respectively, with respect to 100 parts by weight of the base rubber, to impart actions as the vulcanization accelerator activator thereto.

The antioxidant is an additive used to stop chain reactions during which a tire is automatically oxidized by oxygen. The antioxidant may include any one suitably selected from the group consisting of amine, phenol, quinoline, imidazole, carbamate metal salts, waxes and combinations thereof.

The amine antioxidant may be any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl p-phenylenediamine, N-phenyl-N'-octyl-p-phenylenediamine and a combination thereof. The phenol antioxidant may be any one selected from the group consisting of phenols such as 2,2'-methylene-bis(4-methyl-6-tert-butylphenol), 2,2'-isobutylidene-bis(4,6-dimethylphenol), 2,6-di-t-butyl-p-cresol and a combination thereof. The quinoline antioxidant may be 2,2,4-trimethyl-1,2-dihydroquinoline and a derivative thereof and specifically may include any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline and a combination thereof. The wax is preferably waxy hydrocarbon.

The antioxidant requires anti-aging activity as well as high solubility in rubber, low volatility and inactivity to rubber while not inhibiting vulcanization. Taking into consideration these requirements, the antioxidant may be present in an amount of 0.5 to 2.0 parts by weight, with respect to 100 parts by weight of the base rubber.

The softening agent means other oil material used for mixing or production of rubbers, which is added to the rubber composition in order to impart plasticity to rubber and thereby facilitate processing or to lower hardness of the vulcanization rubber. The softening agent means a process oil or other oil included in rubber compositions. The softening agent may be any one selected from the group consisting of a petroleum oil, a vegetable oil and a combination thereof, but the present invention is not limited thereto.

The petroleum oil may be any one selected from the group consisting of a paraffinic oil, a naphthenic oil, an aromatic oil and a combination thereof.

Representative examples of the paraffinic oil include P-1, P-2, P-3, P-4, P-5, P-6 and the like, produced by Michang Oil Co., Ltd., representative examples of the naphthenic oil include N-1, N-2, N-3 and the like, produced by Michang Oil Co., Ltd., and representative examples of the aromatic oil include A-2, A-3 and the like, produced by Michang Oil Co., Ltd.

However, recently, as interest in environmental problems increases and it is known that the possibility of causing cancer is high when the content of polycyclic aromatic hydrocarbons (hereinafter, referred to as "PAHs") in the aromatic oil is 3% by weight or more, treated distillate aromatic extract (TDAE) oil, mild extraction solvate (MES) oil, residual aromatic extract (RAE) oil or heavy naphthenic oil is preferably used.

In particular, preferably, the oil used as the softening agent has 3% by weight or less of a total PAH ingredient, with respect to the total weight of the oil and a kinematic viscosity of 95 or more (210°F SUS) and includes 15 to 25% by weight of an aromatic ingredient, 27 to 37% by weight of a naphthene ingredient and 38 to 58% by weight of a paraffinic ingredient in the softening agent.

The TDAE oil imparts excellent low-temperature characteristics and fuel consumption efficiency to a tire tread including the TDAE oil and is advantageous in environmental factors such as carcinogenicity of PAHs.

The vegetable oil may include any one selected from the group consisting of castor oil, cottonseed oil, linseed oil, canola oil, soybean oil, palm oil, coconut oil, peanut oil, pine oil, pine tar, tall oil, cone oil, rice bran oil, safflower oil, sesame oil, olive oil, sunflower oil, palm kernel oil, camellia oil, Jojoba oil, macadamia nut oil, Saffola oil, tung oil and a combination thereof.

The method of producing a tire tread includes producing a silica bar, refining a tire tread composition in the form of a bar, alternately arranging the tire tread composition refined in the form of a bar and the silica bar in a molding frame and producing a tread by extrusion.

The refining and extrusion may be carried out in a suitable mixer by a first step of thermomechanical treatment or mixing at a maximum temperature of 110 to 190°C, preferably at a high temperature of 130 to 180°C (referred to as a "non-production" step) and a second step of mechanical treatment typically at a low temperature of less than 110°C, for example, at 40 to 100°C (referred to as a "production" step), but the present invention is not limited thereto.

The tire tread is applicable to all tires. Most preferably, when the tire is applied to a slick tire, improved grip performance can be exerted. The slick tire includes a tire having a patterned slick.

The tire according to another embodiment of the present invention includes the tire tread.

The method of producing the tire including the tire tread may be carried out by any conventional method used for production of tires and a detailed description thereof will not be given.

Examples of the tire include, but are not limited to, tires for off-road racing, tires for small trucks (LTR) and tires for passenger vehicles.

Hereinafter, examples of the present invention will be described in detail such that a person having ordinary knowledge in the field to which the present invention pertains can implement the present invention. However, the present invention can be implemented in various different forms and is not limited to examples described herein.

### [Production Example 1: Production of silica bar]

A master batch consisting of silica, a silane coupling agent, a base rubber, silica and ultrafine particle carbon black and additives were mixed to produce silica bars with a width of 0.2 mm, a height of 3 m and a length equal to an arc of the tire.

The silica bar was produced such that different-sized silica particles are disposed in upper and lower parts in a tread thickness direction, and a diameter of silica disposed in the upper part of the silica bar was 2 µm and a diameter of silica disposed in the lower part of silica bar was 4 µm.

### [Production Example 2: Preparation of tire tread rubber composition]

A rubber composition for tires including the silica bar according to Production Example 1 was prepared. The preparation of the rubber composition was carried out in accordance with an ordinary method of preparing a rubber composition and the present invention is not particularly limited.

**TABLE 1**

| | Example 1 | Example 2 | Example 3 | Example 4 | Example 5 | Example 6 |
|---|---|---|---|---|---|---|
| Base rubber¹⁾ | 100 | 100 | 100 | 100 | 100 | 100 |
| Zinc oxide | 3.0 | 3.0 | 3.0 | 3.0 | 3.0 | 3.0 |
| Stearic acid | 1.0 | 1.0 | 1.0 | 1.0 | 1.0 | 1.0 |
| Sulfur | 1.0 | 1.0 | 1.0 | 1.0 | 1.0 | 1.0 |
| Accelerator 1²⁾ | 2.5 | 2.5 | 2.5 | 2.5 | 2.5 | 2.5 |
| Accelerator 2³⁾ | 2 | 2 | 2 | 2 | 2 | 2 |
| Silica bar⁴⁾ | 10 | 20 | 30 | 40 | 50 | 100 |

| | | | | | | |
|---|---|---|---|---|---|---|
| (unit: parts by weight) 1) Base rubber: styrene-butadiene rubber. 2) Accelerator 1: TT (thiuram-based vulcanization accelerator) 3) Accelerator 2: DPG 4) Silica bar: Silica bars produced in Example and Comparative Example in TABLE 1 were applied. The content of the silica bar was controlled by the number of silica bars. | | | | | | |

### [Production Example 3: Production of tire tread and tire including the same]

A tread was produced using the rubber composition and a tire with a size of 280/640R18 Z207 and an air pressure of 200 kPa was produced by an ordinary production method.

### [Test Example: Evaluation of tire performance]

The rubber compositions prepared in Example and Comparative Example were used and the tire including a tread was removed and physical properties thereof were measured. Results are shown in the following Table 2.
1) Mixing/blending performance was evaluated by comparing mixing chart and temperature conditions between Comparative Example and Example.
   * Mixing/blending performance score table: 1 (very bad) to 10 (very good)
2) Absorption/discharge performance was evaluated by testing absorption/discharge time and workability in a kneader after mixing.
   * Absorption/discharge performance score table: 1 (very bad) to 10 (very good)
3) Grip performance: initial grip performance and grip performance continuity were evaluated by measuring a lab time at each driving when a test driver continuously drove a circuit course (2 km) 10 times under wet road conditions at an air pressure of 200 kPa using a tire with a size of 280/640R18 Z207 including a tread produced using the rubber composition.
   * Grip performance score table: 1 (very bad) to 10 (very good)
4) 300% modulus and elongation were measured in accordance with ISO 37 Specification.
5) Abrasion resistance was measured in accordance with JIS K6264.

**TABLE 2**

| | Example 1 | Example 2 | Example 3 | Example 4 | Example 5 | Example 6 |
|---|---|---|---|---|---|---|
| Mixing/blending performance¹⁾ | 8 | 7 | 6.5 | 6 | 6 | 5.2 |
| Absorbency²⁾ | 2 | 3 | 5 | 6 | 7 | 10 |
| Permeability²⁾ | 2 | 2.5 | 4.5 | 5 | 6 | 10 |
| Grip performance on wet road³⁾ | 2 | 2.5 | 4.5 | 5 | 6 | 10 |
| Wet road grip performance³⁾ | 2 | 3 | 4 | 7 | 8 | 10 |
| Grip performance on dried road³⁾ | 7 | 6.7 | 6.7 | 6.3 | 6.1 | 6 |
| 300% modulus (MPa)⁴⁾ | 50 | 55 | 60 | 71 | 78 | 92 |
| Elongation (%)⁴⁾ | 420 | 410 | 405 | 400 | 395 | 375 |
| Abrasion resistance (Index)⁵⁾ | 100 | 120 | 123 | 135 | 140 | 160 |

As can be seen from Table 2, as the content of the silica bar increases, absorbency and permeability as well as grip performance on wet roads are improved.

## Claims

1. A tire tread comprising a silica bar (120) extending in a tire (100) circumferential direction,
wherein an upper part of the silica bar (120) is exposed to a tread (110) so as to contact the road,
**characterized in that** the silica bar (120) comprises silica having different particle sizes disposed in upper and lower parts (121, 122) in a tread thickness direction,
wherein silica with a particle diameter of 1.5 to 3.0 µm is present in the upper part (121) of the silica bar (120), and
silica with a particle diameter of 3.5 to 5.0 µm is present in the lower part (122) of the silica bar (120).

2. The tire tread according to claim 1, wherein the silica bar (120) has a width of 0.2 to 30 mm and a height of 0.2 to 30 mm.

3. The tire tread according to claim 1, wherein an insertion angle between the silica bar (120) and an under tread (112) is 5 to 90° with respect to the interface between the under tread (112) and a cap tread (111).

4. The tire tread according to claim 1, wherein the upper part (121) of the silica bar (120) is disposed in a cap tread (111) and the lower part (122) of the silica bar (120) is disposed in an under tread (112).

5. The tire tread according to claim 1, wherein the upper and lower parts (121, 122) of the silica bar (120) are disposed in the cap tread (111).

6. The tire tread according to claim 1, wherein the silica bar (120) is produced using a master batch including 100 parts by weight of a base rubber, 30 to 180 parts by weight of silica and 5 to 50 parts by weight of ultrafine particle carbon black,
wherein the ultrafine particle carbon black has an iodine adsorption value of 200 to 1000 mg/g and a DBP oil absorption of 150 to 800 ml/100g.

7. The tire tread according to claim 1, wherein the tread (110) including the silica bar (120) comprises:
a cap tread (111); and
an under tread (112),
wherein the cap tread (111) excluding the silica bar (120) comprises:
100 parts by weight of a base rubber; and
50 to 80 parts by weight of silica.

8. The tire tread according to claim 1, wherein the tread (110) including the silica bar (120) comprises:
a cap tread (111); and
an under tread (112),
wherein the under tread (112) excluding the silica bar (120) comprises:
100 parts by weight of a base rubber; and
10 to 20 parts by weight of silica.

9. The tire tread according to any one of claims 6 to 8, wherein the base rubber comprises any one selected from the group consisting of polyisoprene rubber, polybutadiene rubber, a conjugated diene aromatic vinyl copolymer, a nitrile conjugated diene copolymer, hydrogenated nitrile butadiene rubber, olefin rubber, ethylene-propylene rubber modified with maleic acid, butyl rubber, a copolymer of isobutylene and aromatic vinyl, a copolymer of isobutylene and a diene monomer, acrylic rubber, halogenated rubber, chloroprene rubber and a mixture thereof.

10. The tire tread according to any one of claims 6 to 8, wherein the tire tread (110) further comprises:
0.5 to 4.0 parts by weight of a vulcanizing agent;
0.5 to 2.0 parts by weight of a vulcanization accelerator; and
0.5 to 2.0 parts by weight of an antioxidant, with respect to 100 parts by weight of the base rubber.

11. The tire tread according to claim 1, wherein the tire tread (110) is a slick tire tread.

12. A method of producing a tire tread (110) comprising:
producing a silica bar (120);
refining a tire tread composition in the form of a bar;
alternately arranging the tire tread composition refined in the form of a bar and the silica bar (120) in a molding frame; and
producing a tread (110) by extrusion,
**characterized in that** the silica bar (120) comprises silica having different particle sizes disposed in upper and lower parts (121, 122) in a tread thickness direction,
wherein silica with a particle diameter of 1.5 to 3.0 µm is present in the upper part (121) of the silica bar (120), and
silica with a particle diameter of 3.5 to 5.0 µm is present in the lower part (122) of the silica bar (120).

## Patentansprüche

1. Reifenlauffläche mit einem siliciumdioxidhaltigen Silicaband (120), das sich in einer Umfangsrichtung eines Reifens (100) erstreckt, wobei ein oberer Teil des Silicabands (120) an einer Lauffläche (110) freiliegt, um die Straße zu berühren, **dadurch gekennzeichnet, dass** das Silicaband (120) Siliciumdioxid mit unterschiedlichen Teilchengrößen umfasst, die in einer Dickenrichtung der Lauffläche in oberen und in unteren Bereichen (121, 122) angeordnet sind, wobei Siliciumdioxid mit einem Teilchendurchmesser von 1,5 bis 3,0 µm in dem oberen Bereich (121) des Silicabands (120) vorhanden ist und Siliciumdioxid mit einem Teilchendurchmesser von 3,5 bis 5,0 µm in dem unteren Bereich (122) des Silicabands (120) vorhanden ist.

2. Reifenlauffläche nach Anspruch 1, bei der das Silicaband (120) eine Breite von 0,2 bis 30 mm und eine Höhe von 0,2 bis 30 mm hat.

3. Reifenlauffläche nach Anspruch 1, bei der ein Einfügewinkel zwischen dem Silicaband (120) und einer Unterlauffläche (112) 5 bis 90° in Bezug auf die Übergangsfläche zwischen der Unterlauffläche (112) und einer Decklauffläche (111) ist.

4. Reifenlauffläche nach Anspruch 1, bei der der obere Bereich (121) des Silicabands (120) in einer Decklauffläche (111) und der untere Bereich (122) des Silicabands (120) in einer Unterlauffläche (112) angeordnet ist.

5. Reifenlauffläche nach Anspruch 1, bei der die oberen und unteren Bereiche (121, 122) des Silicabands (120) in der Decklauffläche (111) angeordnet sind.

6. Reifenlauffläche nach Anspruch 1, bei der das Silicaband (120) unter Verwendung einer Muttercharge mit 100 Gewichtsteilen eines Basiskautschuks, 30 bis 180 Gewichtsteilen an Siliciumdioxid und 5 bis 50 Gewichtsteilen an hochfeinem pudrigem Ruß hergestellt ist, wobei der hochfeine Ruß einen lodadsorptionswert von 200 bis 1000 mg/g und eine DBP-Öl-Absorption von 150 bis 800 ml/100g bleibt.

7. Reifenlauffläche nach Anspruch 1, bei der die das Silicaband (120) aufweisende Lauffläche (110) über eine Decklauffläche (111) und über eine Unterlauffläche (112) verfügt, bei der die Decklauffläche (111) ohne das Silicaband (120) 100 Gewichtsteile eines Basiskautschuks und 50 bis 80 Gewichtsteile an Siliciumdioxid aufweist.

8. Reifenlauffläche nach Anspruch 1, bei der die das Silicaband (120) aufweisende Lauffläche (110) über eine Decklauffläche (111) und über eine Unterlauffläche (112) verfügt, bei der die Unterlauffläche (112) ohne das Silicaband (120) 100 Gewichtsteile eines Basiskautschuks und 10 bis 20 Gewichtsteile an Siliciumdioxid aufweist.

9. Reifenlauffläche nach einem der Ansprüche 6 bis 8, bei der der Basiskautschuk einen aus der Gruppe bestehend aus Polyisoprenkautschuk, Polybutadienkautschuk, Copolymer aus konjugiertem Dien und aromatischem Vinyl, Copolymer aus Nitril und konjugiertem Dien, hydrierter Nitril-Butadien-Kautschuk, Olefinkautschuk, mit Maleinsäure modifizierter Ethylen-Propylen-Kautschuk, Butylkautschuk, ein Copolymer aus Isobuten und aromatischem Vinyl, ein Copolymer aus Isobuten und einem Dienmonomer, Acrylkautschuk, halogenisierter Kautschuk, Chloroprenkautschuk und eine Mischung davon ausgewählten Bestandteil umfasst.

10. Reifenlauffläche nach einem der Ansprüche 6 bis 8, bei der die Reifenlauffläche (110) weiterhin 0,5 bis 4,0 Gewichtsteile eines Vulkanisiermittels, 0,5 bis 2,0 Gewichtsteile eines Vulkanisierbeschleunigers und 0,5 bis 2,0 Gewichtsteile eines Antioxidationsmittels in Bezug auf 100 Gewichtsteile des Basiskautschuks aufweist.

11. Reifenlauffläche nach Anspruch 1, bei der die Reifenlauffläche (110) eine profillose Reifenlauffläche ist.

12. Verfahren zum Herstellen einer Reifenlauffläche (110) mit Herstellen eines siliciumdioxidhaltigen Silicabands (120), Aufarbeiten einer Reifenlaufflächenzusammensetzung in Gestalt eines Bandes, alternierendes Anordnen der in Gestalt eines Bandes aufbereiteten Reifenlauflächenzusammensetzung und des Silicabands (120) in einem Formrahmen und Herstellen einer Lauffläche (110) durch Extrusion, **dadurch gekennzeichnet, dass** das Silicaband (120) Siliciumdioxid mit unterschiedlichen Teilchengrößen umfasst, die in einer Dickenrichtung der Lauffläche in oberen und in unteren Bereichen (121, 122) angeordnet sind, wobei Siliciumdioxid mit einem Teilchendurchmesser von 1,5 bis 3,0 µm in dem oberen Bereich (121) des Silicabands (120) vorhanden ist und Siliciumdioxid mit einem Teilchendurchmesser von 3,5 bis 5,0 µm in dem unteren Bereich (122) des Silicabands (120) vorhanden ist.

## Revendications

1. Bande de roulement de pneumatique comprenant une barre de silice (120) s'étendant dans une direction circonférentielle d'un pneumatique (100),
dans lequel une partie supérieure de la barre de silice (120) est exposée à une bande de roulement (110) de manière à entrer en contact avec la route,
**caractérisé en ce que** la barre de silice (120) comprend de la silice ayant différentes tailles de particules disposée dans des parties supérieure et inférieure (121, 122) dans une direction d'épaisseur de bande de roulement,
dans lequel de la silice ayant un diamètre de particules de 1,5 à 3,0 µm est présente dans la partie supérieure (121) de la barre de silice (120), et
de la silice ayant un diamètre de particules de 3,5 à 5,0 µm est présente dans la partie inférieure (122) de la barre de silice (120).

2. Bande de roulement de pneumatique selon la revendication 1, dans laquelle la barre de silice (120) a une largeur de 0,2 à 30 mm et une hauteur de 0,2 à 30 mm.

3. Bande de roulement de pneumatique selon la revendication 1, dans laquelle un angle d'insertion entre la barre de silice (120) et une bande de roulement inférieure (112) est de 5 à 90° par rapport à l'interface entre la bande de roulement inférieure (112) et une bande de roulement de chape (111).

4. Bande de roulement de pneumatique selon la revendication 1, dans laquelle la partie supérieure (121) de la barre de silice (120) est disposée dans une bande de roulement de chape (111) et la partie inférieure (122) de la barre de silice (120) est disposée dans une bande de roulement inférieure (112).

5. Bande de roulement de pneumatique selon la revendication 1, dans laquelle les parties supérieure et inférieure (121, 122) de la barre de silice (120) sont disposées dans la bande de roulement de chape (111).

6. Bande de roulement de pneumatique selon l'une quelconque des revendications 1 à 5, dans laquelle la barre de silice (120) est produite en utilisant un mélange maître comprenant 100 parties en poids de caoutchouc de base, 30 à 180 parties de silice et 5 à 50 parties en poids de particules de noir de carbone à particules ultrafines,
dans lequel le noir de carbone à particules ultrafines a un indice d'adsorption d'iode de 200 à 1 000 mg/g et une absorption d'huile DBP de 150 à 800 ml/100g.

7. Bande de roulement de pneumatique selon la revendication 1, dans laquelle la bande de roulement (110) comprenant la barre de silice (120) comprend :
une bande de roulement de chape (111) ; et
une bande de roulement inférieure (112),
dans laquelle la bande de roulement de chape (111), à l'exclusion de la barre de silice (120), comprend :
100 parties en poids d'un caoutchouc de base ; et
50 à 80 parties en poids de silice.

8. Bande de roulement de pneumatique selon la revendication 1, dans laquelle la bande de roulement (110) comprenant la barre de silice (120) comprend :
une bande de roulement de chape (111) ; et
une bande de roulement inférieure (112),
dans laquelle la bande de roulement (112), à l'exclusion de la barre de silice (120), comprend :
100 parties en poids d'un caoutchouc de base ; et
10 à 20 parties en poids de silice.

9. Bande de roulement de pneumatique selon l'une quelconque des revendications 6 à 8, dans laquelle le caoutchouc de base comprend une quelconque choisi dans le groupe comprenant caoutchouc de polyisoprène, caoutchouc de polybutadiène, copolymère de vinyle aromatique-diène conjugué, copolymère de diène conjugué-nitrile, caoutchouc de nitrile-butadiène hydrogéné, caoutchouc d'oléfine, caoutchouc d'éthylène-propylène modifié avec de l'acide maléique, caoutchouc de butyle, copolymère d'isobutylène et de vinyle aromatique, copolymère d'isobutylène et d'un monomère diénique, caoutchouc acrylique, caoutchouc halogéné, caoutchouc de chloroprène, et un mélange de ceux-ci.

10. Bande de roulement de pneumatique selon l'une quelconque des revendications 6 à 8, dans laquelle la bande de roulement (110) comprend en outre :
0,5 à 4,0 parties en poids d'un agent de vulcanisation ;
0,5 à 2,0 parties en poids d'un accélérateur de vulcanisation ; et
0,5 à 2,0 parties en poids d'un antioxydant, par rapport à 100 parties en poids du caoutchouc de base.

11. Bande de roulement de pneumatique selon la revendication 1, dans laquelle la bande de roulement (110) est une bande de roulement de pneumatique lisse.

12. Procédé de production d'une bande de roulement (110) comprenant :
la production d'une barre de silice (120);
l'affinage d'une composition de bande de roulement de pneumatique sous la forme d'une barre ;
l'agencement en alternance de la composition de la bande de roulement de pneumatique sous la forme d'une barre et de la barre de silice (120) dans un châssis de moulage ; et
la production d'une bande de roulement (110) par extrusion,
**caractérisé en ce que** la barre de silice (120) comprend de la silice ayant différentes tailles de particules disposée dans les parties supérieure et inférieure (121, 122) dans une direction d'épaisseur de bande de roulement,
dans lequel de la silice ayant un diamètre de particules de 1,5 à 3,0 µm est présente dans la partie supérieure (121) de la barre de silice (120), et
de la silice ayant un diamètre de particules de 3,5 à 5,0 µm est présente dans la partie inférieure (122) de la barre de silice (120).
